# EUROPÄISCHE PATENTSCHRIFT

(11) **EP 2 904 050 B1**
(45) Veröffentlichungstag und Bekanntmachung des Hinweises auf die Patenterteilung: **09.11.2016**
(21) Anmeldenummer: 13770650.3
(22) Anmeldetag: 23.09.2013
(51) Int. Cl.: C08L 75/04, C09K 5/06, F16L 9/00, F16L 59/14

(54) **PIPELINE MIT WÄRMESPEICHERNDEN EIGENSCHAFTEN**
PIPELINE WITH HEAT STORAGE PROPERTIES
PIPELINE AVEC PROPRIÉTÉS D'ACCUMULATION DE CHALEUR

(30) Priorität: 01.10.2012 EP 12186819
(43) Veröffentlichungstag der Anmeldung: 12.08.2015
(73) Patentinhaber: BASF SE, 67056 Ludwigshafen am Rhein (DE)
(72) Erfinder: FREIDANK, Daniel, Pudong New District Shanghai 200135 (CN); PETROVIC, Dejan, 49080 Osnabrück (DE); LENG, Wei, Shanghai 200433 (CN); LIESE, Julia, 28237 Bremen (DE)
(74) Vertreter: BASF IP Association
(86) Internationale Anmeldenummer: PCT/EP2013/069655
(87) Internationale Veröffentlichungsnummer: WO 2014/053342

(56) Entgegenhaltungen:
- WO-A1-02/34809
- US-A1- 2007 240 781

## Beschreibung

Die vorliegende Erfindung betrifft ein Verfahren zur Herstellung von Pipelines mit wärmespeichernden Eigenschaften, bei dem man a) organisches Polyisocyanat mit b) mindestens einer polymeren Verbindung mit mindestens zwei gegenüber Isocyanat reaktiven Wasserstoffatomen, c) gegebenenfalls Kettenverlängerungsmittel und/oder Vernetzungsmittel, d) Katalysator, e) Wachs und f) gegebenenfalls sonstigen Hilfsmitteln und/oder Zusatzstoffen, zu einer ersten Reaktionsmischung vermischt, die erste Reaktionsmischung auf ein Rohr aufträgt und zu einer ersten Polyurethanschicht ausreagieren lässt. Weiter betrifft die vorliegende Erfindung eine Pipeline mit wärmespeichernden Eigenschaften, erhältlich nach einem solchen Verfahren.

Üblicherweise lagert Rohöl im Boden bei Temperaturen von größer 40 °C und teilweise bei Temperaturen von bis zu mehr als 100 °C. Bei diesen Temperaturen ist das Rohöl gut fließfähig und kann leicht gefördert werden. Problematischer ist die Off Shore Förderung von Rohöl. Nach dem Austritt aus dem Bohrloch muss das Rohöl zum Teil mehrere hundert Meter durch kaltes Wasser mit einer Temperatur von ca. 4 °C geführt werden, bevor es die Wasseroberfläche erreicht. Bei der Förderung von Rohöl kann es aus technischen Gründen zu kurzzeitigen Stillständen der Ölförderung kommen. Ist die Förderpipeline nicht isoliert, kühlt dann das Rohöl in der Pipeline schnell ab und kann die Pipeline verstopfen.

Um dies zu verhindern, werden Pipelines häufig mit einer isolierenden Schicht umgeben. Solche isolierten Pipelines sind bekannt und beispielsweise in WO 99/3922 oder WO 02/72701 beschrieben. Dabei werden Mikrohohlglaskugeln in einem elastomeren Polymermaterial dispergiert und bilden eine druckfeste isolierende Schicht, die auch dem Wasserdruck in großer Tiefe standhalten kann.

Die Gefahr des Verstopfens von Off Shore Pipelines durch Abkühlen des darin enthaltenen Rohöls bei einem kurzzeitigen Produktionsstopp konnte durch den Einsatz von verkapselten Latentwärmespeichern weiter verringert werden. So beschreibt beispielsweise WO 2005113631 eine Off Shore Pipeline, die eine Polyurethanisolierung enthält, wobei diese Polyurethanisolierung Mikroholkugeln und verkapselte Latentwärmespeicher enthält. Als verkapselte Latentwärmespeicher werden dabei lipophile Substanzen mit einem fest/flüssig-Übergang oberhalb von 20 °C, meist Wachse, eingesetzt, die in einer Hülle aus polymerisiertem Material, beispielsweise einem duroplastischen Polymer, wie Formaldehydharzen, Polyharnstoffen und Polyurethanen sowie hochvernetzte Methacrylsäureesterpolymeren verkapselt vorliegen. Bei laufender Rohölförderung nehmen die Latentwärmespeicher Wärme des warmen Rohöls auf und schmelzen. Bei einem kurzzeitigen Produktionsstopp kühlt die Isolierschicht von außen her langsam ab, wobei sich auch die lipophile Füllung der Latentwärmespeicher abkühlt, verfestigt und dabei die aufgenommenen Wärme wieder an das Rohöl abgibt. Ähnliche Lösungen sind in DE 10256550, WO 2004003424, US 6,000,438, WO 2002016733, US20070240781 oder CN 101545565 beschrieben. Dabei verhindert die Kapsel, dass der Latentwärmespeicher mit der Zeit aus der Polyurethanisolierung ausgetrieben wird.

Nachteilig an den verkapselten Latentwärmespeichern ist, dass nur vergleichsweise geringe Mengen Latentwärmespeicher in das Matrixmaterial eingebracht werden können, da die Reaktionsmischung wegen der hohen Viskosität nicht mehr verarbeitet werden kann und auch die mechanischen Eigenschaften der isolierenden Schicht stark nachlassen. So werden in diesem Verfahren üblicherweise maximal 20 Gew.-% Latentwärmespeicher in die Polymermatrix eingearbeitet, was nach Abzug des Verkapselungsmaterials einem effektiven Gehalt an wärmespeichernden Wachsen von maximal 15 Gew.-% entspricht. Dies führt zu einer nur geringen Wärmespeicherkapazität und damit wegen der geringe Wärmeabgabe nur zu einer kurzzeitigen Verlängerung von möglichen Produktionsstops ohne Verstopfungsgefahr für die Pipelines.

Um größere Wärmemengen aufnehmen zu können und damit längere Produktionsstops ohne ein Verstopfen der Pipelines zu ermöglichen, wurden sogenannte "Pipe in Pipe" Lösungen beschrieben. Für diese "Pipe in Pipe" Lösungen wird das Förderrohr von einem zweiten Rohr mit größerem Durchmesser umgeben, so dass sich ein Zwischenraum zwischen beiden Rohren bildet. In diesem Zwischenraum befinden sich die wärmespeichernden Wachse. Das zweite Rohr wiederum wird von einer Isolierschicht umgeben. Solche "Pipe in Pipe"-Lösungen sind beispielsweise in CN 101706223, in WO 2010029627, FR 2853388, WO 2002063918, WO 02/34809 oder CN 201785363 beschrieben.

Pipe in Pipe"-Lösungen sind allerdings sehr aufwändig und teuer und können nicht einfach hergestellt werden.

Aufgabe der vorliegenden Erfindung war es Pipelines mit wärmespeichernden Eigenschaften zu liefern, die gute Isoliereigenschaften und hohe wärmespeichernde Eigenschaften aufweisen und so bei einem möglichen Produktionsstopp das Rohöl in der Pipeline lange bei einer förderbaren Temperatur halten, die aber auch einfach, beispielsweise direkt an Bord von Verlegungsschiffen, hergestellt werden können.

Die vorliegende Erfindung wird gelöst durch eine wärmeisolierende Pipeline, erhältlich durch ein Verfahren, bei dem man a) organisches Polyisocyanat mit b) mindestens einer polymeren Verbindung mit mindestens zwei gegenüber Isocyanat reaktiven Wasserstoffatomen, c) gegebenenfalls Kettenverlängerungsmittel und/oder Vernetzungsmittel, d) Katalysator, e) Wachs und f) gegebenenfalls sonstigen Hilfsmitteln und/oder Zusatzstoffen, zu einer ersten Reaktionsmischung vermischt, die erste Reaktionsmischung auf ein Rohr aufträgt und zu einer ersten Polyurethanschicht ausreagieren lässt. Dabei wird das Wachs e) direkt zur Reaktionsmischung zugegeben und ist nicht in einer Hülle aus Glas oder polymerisierten Material verkapselt.

Dabei kann die Reaktionsmischung unter Einsatz einer Wachsdispersion oder auch unter Verwendung des Wachses in flüssiger Form erhalten werden. Wird Wachs (e) direkt als Komponente zur Herstellung der Reaktionsmischung zugegeben, geschieht dies vorzugsweise in einem Mischkopf, insbesondere in einem Hochruckmischkopf. In diesem Mischkopf wird dann das Wachs in flüssiger Form, beispielsweise in geschmolzenem Zustand mit den weiteren Komponenten vermischt. Dabei erfolgt die Vermischung vorzugsweise so, dass Wachströpfchen von einem mittleren Teilchendurchmesser von weniger als einem Millimeter, besonders bevorzugt kleiner als 0,5 mm und insbesondere kleiner als 0,1 mm erhalten werden. Vorzugsweise erfolgt das Vermischen in einem Hochdruckmischkopf. Dabei werden in einer besonders bevorzugten Ausführungsform im Hochdruckmischkopf die Polyisocyanate (a), das Wachs (e) und eine Polyolkomponente, enthaltend die Komponenten (b) bis (d) und gegebenenfalls (f), miteinander vermischt, wobei die Polyolkomponente bereits vor Zugabe in den Mischkopf vorgemischt wird.

Das Wachs (e) kann auch in Form einer Wachsdispersion zugegeben werden. Solche Wachsdispersionen sind bekannt und beispielsweise in WO 2009/138379 beschrieben. Vorzugsweise wird das Wachs in mindestens einem Teil der polymeren Verbindung b) mit mindestens zwei gegenüber Isocyanat reaktiven Wasserstoffatomen und/oder dem Kettenverlängerungsmittel und/oder Vernetzungsmittel c) dispergiert. Dabei kann die Wachsdispersion auch die weiteren Komponenten (d) und (f) enthalten.

Eine solche Wachsdispersion kann beispielsweise erhalten werden durch Zusammengeben und erwärmen der Komponenten, so dass Wachs (e) und die polymere Verbindung b) mit mindestens zwei gegenüber Isocyanat reaktiven Wasserstoffatomen flüssig ist, kräftigem Rühren bei dieser Temperatur, so dass fein verteilte Wachströpfchen erhalten werden und Abkühlen der Dispersion unter Rühren erhalten werden. Gegebenenfalls wird zur Verbesserung der Lagerbeständigkeit dieser Dispersion oder zur Erhöhung des Wachsgehalts in der Dispersion noch ein Dispersionsmittel eingesetzt.

Die zur Herstellung der erfindungsgemäßen Polyurethanformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Metandiphenyldiisocyanat, 2,4'-Methandiphenyldiisocyanat, die Mischungen aus monomeren Methandiphenyldiisocyanaten und höherkernigen Homologen des Methandiphenyldiisocyanats (Polymer-MDI), Tetramethylendiisocyanat, Hexamethylendiisocyanat (HDI), die Mischungen aus Hexamethylendiisocyanaten und höherkernigen Homologen des Hexamethylendiisocyanats (Mehrkern-HDI), Isophorondiisocyanat (IPDI), 2,4- oder 2,6-Toluylendiisocyanat (TDI) oder Mischungen der genannten Isocyanate. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.
Dabei kann die Isocyantkomponente (a) auch in Form von Isocyanatgruppenhaltigen Isocynatprepolymeren eingesetzt werden. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, verwendet.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b) beschriebenen polymeren Verbindungen mit gegenüber Isocyanate reaktiven Wasserstoffatomen eingesetzt. Besonders bevorzugt werden als Polyole (a-2) Polyetherole eingesetzt.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter c) beschrieben. Besonders bevorzugt wird als Kettenverlängerer 1,4-Butandiol, Dipropylenglycol und/oder Tripropylenglycol eingesetzt. Vorzugsweise wird dabei das Verhältnis von organischen Polyisocyanaten (a-1) zu Polyolen (a-2) und Kettenverlängerern (a-3) so gewählt, dass das Isocyanatprepolymer einen NCO-Gehalt von 10 bis 28 %, besonders bevorzugt von 14 bis 24 % aufweist.

Polymere Verbindungen mit mindestens zwei gegenüber Isocyanaten reaktiven Wasserstoffatomen (b) weisen ein Molekulargewicht von mindestens 500 g/mol auf. Dabei können alle zur Polyurethanherstellung bekannten Verbindungen mit mindestens zwei reaktiven Wasserstoffatomen und einem Molekulargewicht von mindestens 500 g/mol eingesetzt werden. Diese weisen beispielsweise eine Funktionalität von 2 bis 8 und einem Molekulargewicht von 400 bis 12000 auf. So können beispielsweise Polyetherpolyamine und/oder Polyole, ausgewählt aus der Gruppe der Polyetherpolyole, Polyesterpolyole oder Mischungen daraus, verwendet werden.

Die bevorzugt zur Anwendung kommenden Polyole sind Polyetherole, Polycarbonatpolyole und/oder Polyesterole mit Molekulargewichten zwischen 500 und 12000, bevorzugt 500 bis 6000, insbesondere 500 bis weniger als 3000, und bevorzugt einer mittleren Funktionalität von 2 bis 6, bevorzugt 2 bis 4. Vorzugsweise werden als Polyole ausschließlich Polyetherole und Polycarbonatpolyole eingesetzt.

Die erfindungsgemäß verwendbaren Polyetherole, werden nach bekannten Verfahren hergestellt. Beispielsweise können sie durch anionische Polymerisation mit Alkalihydroxiden, wie z. B. Natrium- oder Kalium- hydroxid oder Alkalialkoholaten, wie z. B. Natriummethylat, Natrium- oder Kaliumethylat oder Kaliumisopropylat als Katalysatoren und unter Zusatz mindestens eines Startermoleküls, das 2 bis 8, vorzugsweise 2 bis 6, reaktive Wasserstoffatome aufweist, oder durch kationische Polymerisation mit Lewissäuren, wie Antimonpentachlorid, Borfluorid-Etherat u. a., oder Bleicherde als Katalysatoren hergestellt werden. Ebenso können Polyetherpolyole durch Doppelmetallcyanidkatalyse aus einem oder mehreren Alkylenoxiden mit 2 bis 4 Kohlenstoffatomen im Alkylenrest hergestellt werden. Auch tertiäre Amine können als Katalysator eingesetzt werden, beispielsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (MDA) und polymerisches MDA. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan; Pentaerythrit, Sorbitol und Saccharose, und Mischungen davon. Die Polyetherpolyole können einzeln oder in Form von Mischungen verwendet werden.

Vorzugsweise enthalten die polymeren Verbindungen mit mindestens zwei gegenüber Isocyanaten reaktiven Wasserstoffatomen (b) Polyetherpolyole auf Basis eines difunktionellen Startermoleküls (b1) und Polyetherpolyole auf Basis eines trifunktionellen Startermoleküls (b2).

Als difunktionelle Startermoleküle zu Herstellung des Bestandteils (b1) kann beispielsweise Ethandiol, Propandiol-1,2 und -1,3, Diethylenglykol, Dipropylenglykol, Butandiol-1,4 oder Hexandiol-1,6 oder Gemische davon verwendet werden. Bevorzugt wird Diethylenglykol oder Dipropylenglykol verwendet.

Im allgemeinen wird die Alkoxylierung des Bestandteils (b1) derart ausgeführt, dass der Bestandteil (b1) ein zahlenmittleres Molekulargewicht von 500 g/mol bis 3500 g/mol, bevorzugt von 600 bis 2500 g/mol, besonders bevorzugt von 800 bis 1500 g/mol aufweist.

Als trifunktionelle Startermoleküle zu Herstellung des Bestandteils (b2) werden bevorzugt Glycerin, Trimethylolpropan oder Gemische davon verwendet.

Im allgemeinen wird die Alkoxylierung des Bestandteils (b2) derart ausgeführt, dass der Bestandteil (b2) ein zahlenmittleres Molekulargewicht von 500 g/mol bis 8000 g/mol, bevorzugt von 1000 bis 6000 g/mol aufweist.

In einer bevorzugten Ausführungsform umfasst der Polyolbestandteil (b2) die Bestandteile (b2-1) und (b2-2), wobei es sich jeweils um ein Polyetherpolyol auf Basis eines trifunktionellen Startermoleküls handelt, jedoch mit unterschiedlichem Molekulargewicht.

Der Bestandteil (b2-1) umfasst ein Polyetherpolyol auf Basis eines trifunktionellen Startermoleküls mit einem zahlenmittleren Molekulargewicht von 500 g/mol bis 3500 g/mol, bevorzugt von 1000 bis 3200 g/mol, besonders bevorzugt von 1500 bis 3000 g/mol, insbesondere von 1800 bis 2900 g/mol.

Der Bestandteil (b2-2) ist üblicherweise ein Polyetherpolyol auf Basis eines trifunktionellen Startermoleküls mit einem zahlenmittleren Molekulargewicht von mehr als 3500 g/mol bis 8000 g/mol sein, bevorzugt von 3700 bis 7000 g/mol, besonders bevorzugt von 4000 g/mol bis 6000 g/mol.

In einer weiteren Ausführungsform enthalten die polymeren Verbindungen mit mindestens zwei gegenüber Isocyanat reaktiven Wasserstoffatomen als zusätzlichen Bestandteil b3) ein Polyetherpolyol auf Basis eines vier- oder höherfunktionellen Startermoleküls. Bevorzugt verwendet werden 4- bis 6-funktionelle Startermoleküle. Beispiele für geeignete Startermoleküle sind Pentaerythrit, Sorbitol und Saccharose.

Als Kettenverlängerungsmittel und/oder Vernetzungsmittel c) können Substanzen mit einem Molekulargewicht von kleiner 500 g/mol, besonders bevorzugt von 60 bis 400 g/mol eingesetzt werden, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 500, besonders bevorzugt von 60 bis 400 und insbesondere 60 bis 350 eingesetzt. In Betracht kommen beispielsweise aliphatische, cycloaliphatische und/oder araliphatische oder aromatische Diole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylenglykol, Dipropylenglykol, Tripropylenglykol, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Vernetzer (c) niedermolekulare hydroxylgruppenhaltige Polyalkylenoxide auf Basis Ethylen- und/oder 1,2-Propylenoxid, besonders bevorzugt Ethylen und trifunktionellen Startern, insbesondere Glycerin, eingesetzt. Besonders bevorzugt wird als Kettenverlängerer c) Dipropylenglykol eingesetzt.

Die erfindungsgemäß verwendbaren Polycarbonatpolyole, werden nach bekannten Verfahren, beispielsweise wie in JP1998000267980 und US62655524 beschrieben, hergestellt. Sie werden z.B. durch Ester-Austauschreaktion mit einem aliphatischen Diol und Dimethylcarbonat erhalten. Vorzugsweise weisen Polycarbonatpolyole im Sinn der Erfindung zahlenmittlere Molekulargewichte von 500 bis 2000 g/mol, besonders bevorzugt 500 bis 1000 g/mol und Funktionalitäten von vorzugsweise 2 bis 6 und besonders bevorzugt 2 bis 3 auf. Als Polycarbonatpolyole können beispielsweise kommerziell erhältliche Polycarbonatpolyole, wie Eternacoll® UH 100, UH 50 oder PH 200 der Firma UBE Chemicals eingesetzt werden.

Vorzugsweise werden die Komponenten b1), b2) und c) und gegebenenfalls b3) in einer Menge eingesetzt, dass die Viskosität einer Mischung dieser Substanzen bei 25 °C, gemessen nach DIN 53019, weniger als 1000 mPas, bevorzugt weniger als 500 mPas bei 25°C und besonders bevorzugt von 200 bis 400 mPas aufweist.

Dabei enthält die Mischung aus polymeren Verbindungen mit mindestens zwei gegenüber Isocyanat reaktiven Wasserstoffatomen (b) und Kettenverlängerungs- und/oder Vernetzungsmitteln (c) vorzugsweise von 20 bis 60 Gew.-%, besonders bevorzugt von 30 bis 50 Gew.-%, der Komponente b1), von 20 bis 60 Gew.-%, besonders bevorzugt von 30 bis 50 Gew.-% der Komponente b2) und 5 bis 25 Gew.-%, mehr bevorzugt von 7 bis 20 Gew.-% und besonders bevorzugt von 9 bis 18 Gew.-%, Kettenverlängerungsmittel und/oder Vernetzungsmittel c), jeweils bezogen auf das Gesamtgewicht der Komponenten (b) und (c).

Sofern Bestandteil b3) verwendet wird, beträgt im allgemeinen die eingesetzte Menge 0,1 bis 15 Gew.-%, bevorzugt 1 bis 10 Gew.-%, besonders bevorzugt 2 bis 7 Gew.-%, bezogen auf das Gesamtgewicht der Komponenten (b) und (c). Bevorzugt enthält die Komponente b) neben den Komponenten b1), b2) und b3) keine weiteren polymeren Verbindungen mit gegenüber Isocyanat reaktiven Wasserstoffatomen.

Als Katalysatoren (d) zur Herstellung der Polyurethanformkörper werden bevorzugt Verbindungen verwendet, welche die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Als Wachse (e) werden Substanzen bezeichnet, die bei 20 °C knetbar oder fest bis brüchig hart sind, bei 20 °C eine kristalline bis teilkristalline Struktur aufweisen, bei Temperaturen von 25 bis 180 °C, vorzugsweise 30 bis 100 °C ohne Zersetzung schmelzen, 10 °C oberhalb des Schmelzpunktes eine Viskosität von kleiner 1000 mPas aufweisen sowie unter leichtem Druck polierbar sind.

Beispiele für Wachse (e) sind natürliche Wachse, die beispielsweise Ester von organischen Säuren mit 7 bis 100 Kohlenstoffatomen, beispielsweise Fettsäuren, mit langkettigen, primären Alkoholen, beispielsweise mit 5 bis 150 Kohlenstoffatomen, enthalten oder daraus bestehen, chemisch modifizierte Wachse und synthetische Wachse. Beispiele für natürliche Wachse sind Baumwollwachs, Carnaubawachs, Candelillawachs, Espartowachs, Guarumawachs, Japanwachs, Korkwachs, Montanwachs, Ouricurywachs, Reiskeimölwachs, Zuckerrohrwachs, Bienenwachs, Bürzeldrüsenfett, Wollwachs, Schellackwachs, Walrat, Mikrowachse, Ceresin und Ozokerit. Beispiele für chemisch modifizierte Wachse sind hydrierte Jojobawachse, Montanwachs oder Sasolwachse. Beispiele für synthetische Wachse sind Polyalkylenwachse, wie Polyolefinwachse, Polyethylenwachse und Polypropylenwachse, Polyethylenglycolwachse und Amidwachse. Vorzugsweise werden als Wachse synthetische Wachse, insbesondere Polyethylenwachse eingesetzt.

Die Wachse (e) haben dabei vorzugsweise ein gewichtsmittleres Molekulargewicht von 200 bis 5000 g/mol, vorzugsweise 300 bis 5000 g/mol.

Dabei kann durch gezielte Auswahl des Wachses oder einer Kombination von Wachsen der gewünschte Phasenübergang oder Phasenübergangsbereich an die Erfordernisse angepasst werden. Beispielsweise kann das Wachs so gewählt werden, dass die maximale Wärmeabgabe beim Abkühlen bei einer Temperatur erfolgt, die wenig oberhalb der Erstarrungstemperatur des in der Pipeline geförderten Gutes, beispielsweise des geförderten Rohöls, liegt. So kann eine maximale Verlängerung der fließfähigen Zeit des geförderten Gutes erreicht werden. Werden Kombinationen von Wachsen eingesetzt können diese beispielsweise getrennt oder zusammen in einer bzw. mehreren Dispersionen vorliegen oder können getrennt oder gemeinsam dem Mischkopf zudosiert werden.

Diese Wachse (e) werden vorzugsweise in mindestens einer höhermolekularen Verbindung mit mindestens zwei gegenüber Isocyanaten reaktiven Wasserstoffen (b) dispergiert. Ein Verfahren zur Herstellung solcher Wachsdispersionen ist beispielsweise in WO 2009/138379 beschrieben.

Unter einer Wachsdispersion wird im Rahmen der Erfindung die stabile Verteilung eines Wachses (e) als dispergierte Phase in einem Dispersionsmittel, gegebenenfalls unter Einsatz eines Emulgators, verstanden. Stabil bedeutet in diesem Zusammenhang, dass sich die Dispersion bei Raumtemperatur innerhalb von 24 Stunden, vorzugsweise innerhalb von einer Woche und besonders bevorzugt innerhalb von 4 Wochen und insbesondere innerhalb von 8 Wochen nicht entmischt. Die dispergierte Phase weist dabei einen mittleren Teilchendurchmesser von 0,01µm bis 1000µm vorzugsweise 0,1µm bis 100µm und insbesondere 0,5µm bis 20µm auf. Dabei sind mindestens 80 Gew.-% der Teilchen der dispergierten Phase im Teilchengrößenbereich von 0,01µm bis 500µm. Solche Dispersionen sind beispielsweise in WO 2009/138379 beschrieben.

Dabei wird vorzugsweise ein Emulgator eingesetzt, gegebenenfalls, insbesondere bei geringeren Wachskonzentrationen und/oder dem Einsatz von polaren Wachsen , die beispielsweise polare Gruppen, wie OH-Gruppen, Säuregruppen oder Amingruppen enthalten, kann auch auf den Einsatz des Emulgators verzichtet werden. Als Emulgator kann dabei jede emulgierend wirkende Verbindung eingesetzt werden, die zu der oben genannten Dispersion führt. Bei diesen Dispersionsmitteln handelt es sich vorzugsweise um Copolymere, die Molekülteile aufweisen, welche mit dem eingesetzten Wachs kompatibel sind und Molekülteile, welche mit der dispergierten Phase verträglich sind.

Vorzugsweise wird als Emulgator ein Copolymer (C) mit einer Funktionalität gegenüber Isocyanat von mindestens eins und einem Molekulargewicht von 15.000 bis 500.000 g/mol eingesetzt. Vorzugsweise ist das Copolymer (C) aufgebaut aus wenigstens einem α,β-ethylenisch ungesättigten Monomer und wenigstens einem ungesättigten Polyetherpolyol. Dabei sind diese Copolymere bzw. Dispersionen der Copolymere in Polyether oder Polyesterol bei 80 °C flüssig. Das Copolymere (C) wird im Rahmen der vorliegenden Erfindung nicht den polymeren Verbindungen mit gegenüber Isocyanaten reaktiven Wasserstoffatomen (b) zugerechnet.

In einer bevorzugten Ausführungsform entspricht das wenigstens eine α,β-ethylenisch ungesättigte Monomer der allgemeinen Formel (I) 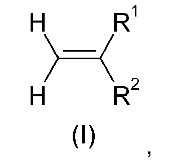 worin
- R¹: C₁-C₃₀-Alkyl, C₂-C₃₀-Alkenyl, C₂-C₃₀-Alkinyl, C₁-C₃₀-Heteroalkyl, substituiertes oder unsubstituiertes C₅-C₃₀-Aryl, substituiertes oder unsubstituiertes C₅-C₃₀-Heteroaryl oder funktionelle Gruppe ausgewählt aus -(C=O)-O-R³ oder -(C=O)-NH-R⁴ mit R³ und R⁴ ausgewählt aus H, C₁-C₃₀-Alkyl, C₂-C₃₀-Alkenyl, C₂-C₃₀-Alkinyl, C₁-C₃₀-Heteroalkyl, substituiertem oder unsubstituiertem C₅-C₃₀-Aryl, substituiertem oder unsubstituiertem C₅-C₃₀-Heteroaryl und
- R²: H, C₁-C₃₀-Alkyl, C₂-C₃₀-Alkenyl, C₂-C₃₀-Alkinyl, C₁-C₃₀-Heteroalkyl, substituiertes oder unsubstituiertes C₅-C₃₀-Aryl oder substituiertes oder unsubstituiertes C₅-C₃₀-Heteroaryl
bedeuten.

Bevorzugt bedeuten in der allgemeinen Formel (I)
- R¹: substituiertes oder unsubstituiertes C₅-C₃₀-Aryl, beispielsweise Benzyl oder Naphthyl, substituiertes oder unsubstituiertes C₅-C₃₀-Heteroaryl oder funktionelle Gruppe ausgewählt aus -(C=O)-O-R³ oder -(C=O)-NH-R⁴ mit R³ und R⁴ ausgewählt aus C₁-C₃₀-Alkyl, insbesonders C₁₂-C₃₀-Alkyl, oder C₂-C₃₀-Alkenyl, insbesonders C₁₂-C₃₀-Alkenyl und
- R²: H, C₁-C₁₂-Alkyl, beispielsweise Methyl, Ethyl, Propyl, Butyl.

Heteroatome sind beispielsweise ausgewählt aus N, O, P, S.

In einer ganz besonders bevorzugten Ausführungsform ist das α,β-ethylenisch ungesättigte Monomer ausgewählt aus der Gruppe bestehend aus Styrol, α-Methylstyrol, Acrylnitril, Acrylaten, Acrylsäureestern oder Methacrylsäureestern oder Acrylsäureamiden oder Methacrylsäureamiden von gesättigten Fettsäuren, beispielsweise Laurinsäure C₁₁H₂₃COOH, Tridecansäure C₁₂H₂₅COOH, Myristinsäure C₁₃H₂₇COOH, Pentadecansäure C₁₄H₂₉COOH, Palmitinsäure C₁₅H₃₁COOH, Margarinsäure C₁₆H₃₃COOH, Stearinsäure C₁₇H₃₅COOH, Nonadecansäure C₁₈H₃₇COOH, Arachinsäure C₁₉H₃₉COOH, Behensäure C₂₁H₄₃COOH, Lignicerinsäure C₂₃H₄₇COOH, Cerotinsäure C₂₅H₅₁COOH, Melissinsäure C₂₉H₅₉COOH, Tubercolostearinsäure i-C₁₈H₃₇COOH, oder ungesättigten Fettsäuren, beispielsweise Palmitoleinsäure C₁₅H₂₉COOH, Ölsäure C₁₇H₃₃COOH, Erucasäure C₂,H₄₁COOH, Linolsäure C₁₇H₃₁COOH, Linolensäure C₁₇H₂₉COOH, Elaeostearinsäure C₁₇H₂₉COOH, Arachidonsäure C₁₉H₃₁COOH, Clupanodonsäure C₂₁H₃₃COOH, Docosahexaensäure C₂₁H₃₁COOH, und Mischungen davon.

Das im Copolymer (C) vorliegende ungesättigte Polyetherpolyol ist in einer bevorzugten Ausführungsform ein ungesättigtes Polyadditionsprodukt von wenigstens einem mehrwertigen Alkohol, beispielsweise Zuckern, wie hydrolysierte Stärke, Glukosesirup, Sorbitol, Saccharose, Pentaerythrit, Dipentaerythrit, Tripentaerythrit, Glycerin, Trimethylolpropan, einem mehrwertigen Amin, beispielsweise thylendiamin, Diethylentriamin, 1,3-Propylendiamin, 1,3-Butylendiamin, 1,4-Butylendiamin, 1,2-, 1,4-, 1,5- und 1,6-Hexamethylendiamin, Phenylendiamin, 2,3-, 2,4- und 2,6-Toluylendiamin, vicinale Toluylendiamine, 4,4'-, 2,4'- und 2,2'-Diaminodiphenylmethan, Alkanolamin, wie Ethanolamin, N-Methyl- und N-Ethylethanolamin, Diethanolamin, N-Methyl-, N-Ethyldiethanolamin, Triethanolamin, Ammoniak, Kondensate aus Aceton oder Formaldehyd mit Phenol oder mehrfunktionelle Alkohole, abgeleitet von Polymeren, die aus hydroxyfunktionellen Monomeren aufgebaut sind, wie Polymere aus Hydroxyethylacrlat, Hydroxymethylacrylat, Hydroxyethylmethacrylat, Hydroxymethylmethacrylat, Hydroxypropylacrylat, Hydroxyproplylmethacrylat oder Copolymere aus diesen Monomeren, wenigstens einem Alkylenoxid, beispielsweise Ethylenoxid, Propylenoxid, Butylenoxid und/oder Pentylenoxid und wenigstens einem ungesättigten Monomeren, beispielsweise mit wenigstens einer Isocyanatgruppe substituiertes Styrol oder α-Methylstyrol, insbesondere Meta-isopropenylbenzylisocyanat, beispielsweise Acrylsäure, Acrylsäurechlorid, Metacrylsäure, Metacrylsäurechlorid, Fumarsäure, Maleinsäureanhydrid, vinylisch ungesättigte Epoxide wie zum Beispiel Acryloylglycidylether, Metacryloylglycidylether.

Ganz besonders bevorzugte Copolymere (C) sind beispielsweise Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 2:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1) mit niedrigerem Molekulargewicht, Copolymere aus Styrol, einem ungesättigten Polyetherpolyol aus Sorbitol, Propylenoxid, Ethylenoxid und meta-Isopropenylbenzylisocyanat (Massenverhältnis 8:1) Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 8:8:1) mit niedrigerem Molekulargewicht, Copolymere aus Styrol, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, Hydroxyethylacrylat, einem ungesättigtem Polyetherpolyol aus Hydroxyethylacrylat, Diisocyanat und Polyetherpolyol, Copolymere aus Stearylacrylat, Hydroxypropylacrylat, einem ungesättigtem Polyetherpolyol aus Hydroxyethylacrylat, Diisocyanat und Polyetherpolyol, Copolymere aus Stearylacrylat, Styrol und einem ungesättigtem Polyetherpolyol aus Hydroxyethylacrylat, Diisocyanat und Polyetherpolyol, Copolymere aus Stearylacrylat, Acrylnitril und einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Acrylnitril, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus meta-Isopropenylbenzylisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus meta-Isopropenylbenzylisocyanat und Polyetherpolyol. Insbesondere bevorzugt sind Copolymere aus Styrol, Stearylacrylat und einen ungesättigten Polyetherpolyol aus Sorbitol, Propylenoxid, Ethylenoxid und meta-Isopropenylbenzylisocyanat. Bevorzugte ungesättigte Polyetherole zur Bildung des Copolymers (C) haben ein Funktionalität von 2 bis 8 und ein zahlenmittleres Molekulargewicht von 2.000g/mol bis 50.000 g/mol.

Diese erfindungsgemäß als Copolymere (C) geeigneten Polymere weisen vorzugsweise ein Molekulargewicht im Bereich von 15.000 bis 1.000.000 g/mol, besonders bevorzugt von 20.000 bis 200.000, insbesondere von 30.000 bis 80.000 g/mol auf. Üblicherweise werden die Molekulargewichte mittels GPC bestimmt, als Standard wird Polystyrol eingesetzt. Dabei ist das Copolymere (C) in der Verbindung (b) löslich und bildet keine duroplastische Hülle um Wachspartikel. Zur Herstellung der Dispersion unter Einsatz des Copolymeren (C) wird das Copolymere (C) als eigenständige Komponente zusammen mit Wachs (e) der Verbindung (b) zugegeben.

Der Emulgator wird dabei vorzugsweise, falls eingesetzt, mit 0,5 bis 40 Gew.-% besonders bevorzugt 1 bis 30 Gew.-%, jeweils bezogen auf das Gewicht des eingesetzten Wachses, verwendet.

Der Anteil des Wachses, bezogen auf das Gesamtgewicht der höhermolekularen Verbindung b), der Kettenverlängerungs- und/oder Vernetzungsmittel c) und der Wachsdispersion e) beträgt vorzugsweise 1 bis 70 Gew.-%, besonders bevorzugt 5 bis 60 und insbesondere 10 bis 50 Gew.-%. Liegt das Wachs dispergiert in den polymeren Verbindungen mit gegenüber Isocyanat reaktiven Wasserstoffatomen (b) vor, werden vorzugsweise keine weiteren Dispersionsmittel eingesetzt.

Gegebenenfalls können der der Mischung der Komponenten a) bis e) Hilfs- und Zusatzstoffe (f) zugesetzt werden. Hier seien beispielsweise oberflächenaktive Substanzen, Farbstoffe, Pigmente, Hydrolyseschutzstabilisatoren, Oxidationsschutzmittel, UV-Schutzmittel und Mikroholkugeln genannt.

Unter dem Begriff Mikrohohlkugeln sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einem Gemisch daraus, eingesetzt werden. Die mineralischen Hohlkugeln können beispielsweise Ton, Aluminiumsilikat, Glas oder Gemische daraus enthalten.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Üblicherweise weisen die organischen oder mineralischen Hohlkugeln einen Durchmesser von 1 bis 1000 µm, bevorzugt von 5 bis 200 µm auf. Üblicherweise weisen die organischen oder mineralischen Hohlkugeln eine Schüttdichte von 0,1 bis 0,4 g/cm³ auf. Sie besitzen im allgemeinen eine Wärmeleitfähigkeit von 0,03 bis 0,12 W/mK. Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikrohohlglaskugeln 3M - Scotchlite^{®} Glass Bubbles verwendet werden. Vorzugsweise enthält die Mischung der Komponenten a9 bis f) keine Mikroholglaskugeln.

Des Weiteren können als Hilfs- und Zusatzstoffe (f) thixotropierende Additive, wie beispielsweise Laromin^{®} C 260 (Di-methyl-methylen-Bis-Cyclohexylamin) enthalten sein. Im allgemeinen liegt die eingesetzte Menge dieser thixotropierenden Additive zwischen 0,1 und 3 Gewichtsteilen, bezogen auf 100 Gewichtsteile der Komponente (b).

Ferner ist es möglich, als Hilfs- und Zusatzstoffe (f) aus dem Stand der Technik bekannte Treibmittel zuzusetzen. Es ist jedoch bevorzugt, dass kein Treibmittel eingesetzt wird, insbesondere, dass kein Wasser zugesetzt wird. Somit enthalten die Komponenten a) und b) besonders bevorzugt kein Treibmittel, abgesehen von Restwasser, welches in technisch hergestellten Polyolen enthalten ist.

Ferner ist es besonders bevorzugt, wenn der Restwassergehalt durch Zusatz von Wasserfängern reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Polyolkomponente b), eingesetzt.

Sofern wie oben beschrieben keine Treibmittel eingesetzt werden, erhält man als erfindungsgemäßes Produkt kompakte Polyurethane und keine Polyurethanschaumstoffe.

Zur Herstellung der erfindungsgemäßen Polyurethanreaktionsmischung werden die organischen Polyisocyanate a) und die Komponenten, die Verbindungen gegenüber Isocyanaten reaktive Wasserstoffatome enthalten, in solchen Mengen zur Umsetzung gebracht, dass das Äquivalenzverhältnis von NCO-Gruppen der Isocyanatgruppen zur Summe der reaktiven Wasserstoffatome 1 : 0,5 bis 1 : 3,50 (entsprechend einem Isocyanatindex von 50 bis 350), vorzugsweise 1 : 0,85 bis 1 : 1,30 und besonders bevorzugt von 1 : 0,9 bis 1 : 1,15 beträgt.

Die Ausgangskomponenten werden üblicherweise bei einer Temperatur von 0 °C bis 100 °C, bevorzugt 15 °C bis 60 °C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen.

Die Reaktionsmischung der Komponenten (a), (b), (d), (e) und gegebenenfalls (c) und (f) werden auf ein Rohr aufgetragen und ausreagieren lassen. Dabei werden im allgemeinen Rohre eingesetzt, wie sie üblicherweise in der Ölförderung, insbesondere im Off-Shore-Bereich eingesetzt werden. Diese umfassen im Rahmen dieser Erfindung auch andere, bei der Ölförderung insbesondere im Offshorebereich eingesetzte rohrähnliche Elemente, wie Rohrmuffen zur Verbindung zweier Rohre, Borlochanschlüsse oder Rohrsammler.

Ein solches Rohr kann ein unbeschichtetes Stahlrohr sein, es können aber auch Rohre eingesetzt werden, die bereits eine oder mehrere Lagen Beschichtung aufweisen. Vorzugsweise wird im Rahmen der vorliegenden Erfindung das Stahlrohr direkt mit der erfindungsgemäßen ersten Polyurethanreaktionsmischung beschichtet. Alternativ kann die erfindungsgemäße erste Polyurethanreaktionsmischung beispielsweise auch auf ein mit powder sprayed fusion-bonded epoxy oder mit Polypropylen beschichtetes Rohr aufgebracht werden. Anschließend wird die erste Polyurethanreaktionsmischung zu einer ersten Polyurethanschicht ausgehärtet, gegebenenfalls unter Wärmebehandlung, beispielsweise durch Bestrahlung oder in einem Ofen.

In einer ersten Ausführungsform erfolgt das Aufbringen der ersten Reaktionsmischung durch Aufgießen auf das sich drehende Rohr. Diese Ausführungsform wird als Rotationsgießverfahren bezeichnet. Dabei wird die erste Reaktionsmischung mittels herkömmlicher Mischvorrichtungen, z.B. Niederdruckmischkopf, erhalten. Der Vorschub des Mischkopfs oder des Rohres wird im allgemeinen so eingestellt, dass bei konstantem Ausstoß die gewünschte Dicke der ersten Polyurethanschicht erreicht wird. Hierzu enthält die Reaktionsmischung bevorzugt tixotropierende Additive, wodurch ein Herabtropfen des Reaktionsgemisches vom rotierenden Rohr verhindert wird.

In einer zweiten Ausführungsform erfolgt das Aufbringen der ersten Reaktionsmischung durch sogenanntes Formgießen. Dabei wird die erste Reaktionsmischung in eine geschlossene - unter Umständen auch beheizte - Form gegeben, in der das innere Rohr (i) (häufig auch als Mediumrohr bezeichnet) eingebettet ist. Der Raum zwischen dem Mediumrohr und der Formwand wird komplett mit der ersten Reaktionsmischung ausgefüllt. Nach dem Aushärten der Polyurethanreaktionsmischung wird die Form entfernt, und das fertig beschichtete Rohr ist liegt vor. Wichtig ist hierbei, dass die Form vollständig ohne Lufteinschläge befüllt wird.

Der Befüllvorgang kann unterspiegelig und auch von oben erfolgen. Hierbei wird aus verfahrenstechnischen Gründen bevorzugt auf ein tixotropierendes Additiv verzichtet, da das Reaktionsgemisch fließfähig bleiben muss, um tatsächlich die Form vollständig füllen zu können.

Die Dicke der ersten Polyurethanschicht beträgt vorzugsweise 5 bis 200 mm, besonders bevorzugt 10 bis 150 mm und insbesondere 20 bis 100 mm. Diese enthält das Wachs (e) in dispergierter Form. Dabei beträgt die mittlere Teilchengröße der dispergierten Wachspartikel 0,01 µm bis 1000 µm, vorzugsweise 0,1µm bis 500µm, besonders bevorzugt 0,5 µm bis 100 µm und insbesondere 0,5 µm bis 20 µm. Dabei sind vorzugsweise mindestens 80 Gew.-% der Wachsteilchen (e) im Teilchengrößenbereich von 0,01 µm bis 500 µm, besonders bevorzugt 0,1 bis 100 µm.

Gegebenenfalls kann auf die erste Polyurethanschicht eine oder mehrere weitere Schichten, z.B. eine isolierende Schicht und/oder eine Deckschicht aus einem Thermoplasten aufgebracht werden.

In einer bevorzugten Ausführungsform wird nach dem Aufbringen der ersten Reaktionsmischung eine weitere Polyurethanreaktionsmischung auf das Rohr aufgebracht. Dabei kann die erste Reaktionsmischung noch nicht vollständig ausrangiert sein oder aber bereits zur ersten Polyurethanschicht ausreagiert sein. Auch kann die Auftragung der zweiten Polyurethanreaktionsmischung direkt auf die erste Polyurethanschicht oder aber auch auf eine gegebenenfalls vorhandene Zwischenschicht erfolgen. Als zweite Polyurethanreaktionsmischung wird dabei vorzugsweise eine Polyurethanreaktionsmischung eingesetzt, die die oben beschriebenen Komponenten (a) bis (f) mit Ausnahme der Komponente (e) enthält. Vorzugsweise weist die zweite Polyurethanreaktionsmischung Mikroholkugeln auf. Insbesondere entspricht die Zusammensetzung der zweiten Polyurethanreaktionsmischung der Zusammensetzung der ersten Polyurethanreaktionsmischung mit der Ausnahme, dass in der zweiten Polyurethanreaktionsmischung keine Wachsdispersion (f) enthalten ist. Dabei enthält die zweite Polyurethanreaktionsmischung vorzugsweise Mikroholkugeln. In dieser Ausführungsform kann das Rohr eine weitere Beschichtung, beispielsweise eine abschließende Beschichtung aus einem thermoplastischen Material, wie es allgemein im Pipelinebau als Außenschicht verwendet wird, enthalten.

Gegenstand der vorliegenden Erfindung ist weiter eine Pipeline mit wärmespeichernden Eigenschaften, erhältlich nach einem erfindungsgemäßen Verfahren. Vorzugsweise handelt es sich bei dieser Pipeline um eine Off Shore-Pipeline, die zur Förderung von Rohöl auf dem Meer eingesetzt wird. Unter einer Pipeline im Sinn der vorliegenden Erfindung sollen nicht nur klassische, beschichtete Rohre sondern auch mit erfindungsgemäßem Polyurethan beschichtete Schweißbereiche von Rohrleitungen, sogenannte "Field Joints", und mit Polyurethan beschichtete Gegenständen, die mit Rohrleitungen in Verbindung stehen, wie Muffen, Bohrlochanschlüsse, Eruptionskreuze, Rohrsammler, Pumpen und Bojen verstanden werden. Weiter schließt Pipeline im Sinn der vorliegenden Erfindung auch Pipelinerohre mit ein, die Ummantellungen zur Verstärkung, wie Bend Stiffener oder Bend Restriktoren aufweisen, wobei die Bend Stiffener und die Bend Restriktoren der erfindungsgemäßen Polyurethanbeschichtung entsprechen. Besonders bevorzugt ist das erfindungsgemäßem mit Polyurethan beschichtete Leitungselement ein mit Polyurethan beschichtetes Rohr einer Off-Shore Pipeline, ein Field Joint einer Off Shore Pipeline oder ein Eruptionskreuz (auch als X-Mas Tree bezeichnet) einer Off Shore Pipeline, insbesondere einer Off Shore Pipeline zur Förderung von Rohöl.

Die Erfindung soll durch nachstehende Beispiele veranschaulicht werden.

Ausgangsmaterialien
- Polyol:: Polytetrahydrofuranpolyol mit OH Zahl 106-118 und überwiegend primären OH-Gruppen
- KV1:: 1,4-Butandiol
- Kat1:: 1-Methylimidazol
- ZM1:: Antifoam MSA
- ZM2:: K-Ca-Na-Zeolith
- ZM3:: verkapseltes MPCM 37D der Fa. Mikrotek
- ZM4:: Luwax V Wachs, Fa. BASF SE
- ZM5:: Paraffin 51-53, Fa. Merck
- ZM6:: Copolymer bestehend aus Stearylacrylat, Styrol, Lupranol 4800 N mit Dodecanthiol in Lupranol 2095 dispergiert
- ZM7:: kommerzieller Vergleichsemulgator Z 6020 Silane der Fa. Dow Corning
- Iso1:: aliphatisches isocyanurat modifiziertes Hexamethylen diisocyanat (HDI) "Basonat HI 100" der Firma BASF mit einen NCO-Gehalt von 22%

Gemäß Tabelle 1 wurden Polyol, Kettenverlängerer, Katalysator und die angegebenen Zusatzmittel (ZM) zur Polyolkomponente (auch als A-Komponente bezeichnet) vermischt und unter Rühren auf 70 °C erwärmt. Die Isocyanatkomponente wurde ebenfalls auf 70 °C erwärmt und mit der Polyolkomponente bei Rührzeit 1 min zur Reaktion gebracht. Die Reaktionsmischung wurde im Heizschrank bei 70 °C für 30 min ausgehärtet.

**Tabelle 1:**

| | Vergleich 1 | Vergleich 2 | Vergleich 3 | Vergleich 4 | Vergleich 5 | Vergleich 6 | Vergleich 7 | Beispiel 1 | Beispiel 2 | Beispiel 3 | Beispiel 4 |
|---|---|---|---|---|---|---|---|---|---|---|---|
| Polyol | 81,95 | 81,95 | 81,95 | 81,95 | 81,95 | 81,95 | 81,95 | 81,95 | 81,95 | 81,95 | 81,9 |
| KV1 | 15 | 15 | 15 | 15 | 15 | 15 | 15 | 15 | 15 | 15 | 15 |
| Kat1 | 0,05 | 0,05 | 0,05 | 0,05 | 0,05 | 0,05 | 0,05 | 0,05 | 0,05 | 0,05 | 0,05 |
| ZM1 | 0,5 | 0,5 | 0,5 | 0,5 | 0,5 | 0,5 | 0,5 | 0,5 | 0,5 | 0,5 | 0,5 |
| ZM2 | 2,5 | 2,5 | 2,5 | 2,5 | 2,5 | 2,5 | 2,5 | 2,5 | 2,5 | 2,5 | 2,5 |
| Σ | 100 | 100 | 100 | 100 | 100 | 100 | 100 | 100 | 100 | 100 | 100 |
| ZM 3 | 50 | 20 | 0 | 0 | 0 | 0 | 0 | 0 | 0 | 0 | 0 |
| ZM 4 | 0 | 0 | 0 | 0 | 0 | 20 | 10 | 10 | 20 | 50 | 0 |
| ZM5 | 0 | 0 | 20 | 20 | 10 | 0 | 0 | 0 | 0 | 0 | 20 |
| ZM 6 | 0 | 0 | 0 | 0 | 0 | 0 | 0 | 4 | 4 | 12 | 4 |
| ZM 7 | 0 | 0 | 0 | 4 | 0 | 0 | 0 | 0 | 0 | 0 | 0 |
| ISO1 | 100 | 100 | 100 | 100 | 100 | 100 | 100 | 100 | 100 | 100 | 100 |
| Index | 100 | 100 | 100 | 100 | 100 | 100 | 100 | 100 | 100 | 100 | 100 |
| Material | + | + | - | - | - | - | ○ | + | + | + | + |
| Viskosität [mPas] | 5083 | 332 | | | | | n.a. | 186 | 273 | 2736 | n.a. |
| Menge PCM | 45% | 18% | | | | | 5% | 10% | 20% | 50% | 200% |
| Zeitgewinn bis Abkühlung auf T_{Phasen-übergang} [S] | 724 (32 °C ) | 289 (32° C) | | | | | n.a. | 288 (35 °C) | 564 (35°C) | 1520 (35°C) | 646 (40°C |

Die Materialeigenschaften wurden visuell begutachtet. Dabei steht "+" für homogenes Material und "-" für kein homogenes Material. In diesem Fall löst sich das Wachs von der Oberfläche. Im verbleibenden Polyurethan lässt sich kein Effekt durch den Phasenübergang von Wachs feststellen. Bei Einsatz von 10 Gew.-% des polyaren Polyetherwachses Luwachs V Wachs der BASF in Vergleichsversuch 7 wurde ein Material erhalten, in dem geringe Teile des Lachses einreagiert werden konnten. Weiter bildete sich aber auch ein Wachsfilm durch überschüssiges Wachs, nicht einreagiertes Wachs auf der Oberfläche.

Die Viskositätsangabe bezieht sich auf die Viskosität der Polyolkomponente bei 75 °C mittels Viskosimetrie an einem Rheometer in Rotationsmodus und Platte-Platte Konfiguration gemessen.

Die Menge PCM bezieht sich auf die Menge an PCM ohne eventuell vorhandene Hülle durch die Verkapselung, bezogen auf das Gesamtgewicht b der Polyolkomponente. Der Zeitgewinn bis zur Abkühlung wurde bei der Kristallisationstemeratur des PCM gemessen Dazu wurde ein zylinderförmiger Prüfkörper gleicher Länge und Durchmesser mit einem in der Mitte des Prüfkörpers abisolierten Thermodraht hergestellt. Die Signale des Theromdrathes wurden mit einem Temperaturschreiber ausgelesen. Der Prüfkörper wurde in einem Wärmeschrank inkubiert und die Aufheizkurve bis zur Temperatur des Wärmeschranks von 140 °C aufgezeichnet, anschließend wurde der Messkörper in ein auf 4 °C temperiertes Wasserbad gestellt und entsprechend die Abkühlkurve aufgenommen. Es wurden Prüfkörper aus Polyurethanen gemäß der Vergleichsbeispiele 1 und 2 sowie der Beispiele 1 bis 6 hergestellt und deren Kurven aufgezeichnet. Am Phasenübergang bei der Erstarrungstemperatur der Wachse wurde die Zeitverzögerung der Abkühlkurve bestimmt.

In allen Fällen mit dem erfindungsgemäßen Emulgator erhält man homogenes Material mit Phase Change Eigenschaften. Dispergiert man das gekapselte PCM-Material, weist die Reaktionsmischung eine hohe Viskosität auf. Aufgrund der Masse des Kapselmaterials ist der effektive Speicherkapazität für Wärme kleiner, was sich in der kurzen Zeit bis zur Abkühlung unter den Erstarrungspunkt des PCMs zeigt (40°C). Mit den schmelzemulgierten PCM lässt sich eine größere Menge Wachs dispergieren, wobei die Viskosität der A-Komponente immer noch niedriger ist als bei den gekapselten PCMs. Aufgrund der größeren Menge an Latentwärmespeicher erhöht sich die Zeit bis zur Abkühlung unter die Erstarrungstemperatur des Wachses. Bei Verwendung eines anderen Wachses (Paraffin) mit höherer Speicherkapazität und Einsatz geringerer Mengen des Wachses bleibt die Viskosität der isocyanatreaktiven Mischung deutlich niedriger, die Zeit bis zur Abkühlung des PU-Materials unter den Erstarrungspunkt des Wachses (40°C) kann aber deutlich vergrößert werden. Die Viskosität der Polyolkomponente unter Einsatz unterschiedlicher Mengen an verkapselten PCM und emulgiertem PCM ist in Tabelle 2 angegeben.

**Tabelle 2**

| Vergleich der Verarbeitbarkeiten anhand der Viskosität der Systeme bei jeweils 75 °C mit gleichen Anteilen an ZM3 und ZM 4 PCM Material | | |
|---|---|---|
| Massenprozent an PCM Gehalt | Viskosität mit ZM 3 | Viskosität mit ZM 4 |
| 0 | 141 | 140 |
| 10 | 198 | 186 |
| 20 | 332 | 273 |
| 35 | 1187 | 828 |
| 55 | 6086 | 3276 |

## Patentansprüche

1. Verfahren zur Herstellung von Pipelines mit wärmespeichernden Eigenschaften, bei dem man
a) organisches Polyisocyanat mit
b) mindestens einer polymeren Verbindung mit mindestens zwei gegenüber Isocyanat reaktiven Wasserstoffatomen,
c) gegebenenfalls Kettenverlängerungsmittel und/oder Vernetzungsmittel,
d) Katalysator,
e) Wachs und
f) gegebenenfalls sonstigen Hilfsmitteln und/oder Zusatzstoffen,
zu einer ersten Reaktionsmischung vermischt, die erste Reaktionsmischung auf ein Rohr aufträgt (kann bereits gecoated sein) und zu einer wärmespeichernden Polyurethanschicht mit dispergierten Wachspartikeln ausreagieren lässt.

2. Verfahren nach Anspruch 1, **dadurch gekennzeichnet, dass** das Wachs (e) in Form einer Wachsdispersion eingesetzt wird.

3. Verfahren nach Anspruch 2, **dadurch gekennzeichnet, dass** die Wachsteilchen in der Wachsdispersion eine mittlere Teilchengröße von 0,01µm bis 500µm aufweisen.

4. Verfahren nach Anspruch 2 oder 3, **dadurch gekennzeichnet, dass** die Wachsdispersion eine Dispersion eines Polyethylenwachses in einer polymeren Verbindung mit gegenüber Isocyanaten reaktiven Wasserstoffatomen ist.

5. Verfahren nach Anspruch 4, **dadurch gekennzeichnet, dass** als Emulgator ein Copolymer (C) eingesetzt wird.

6. Verfahren nach Anspruch 5, **dadurch gekennzeichnet, dass** das Copolymer (C) aufgebaut ist aus wenigstens einem α,β-ethylenisch ungesättigten Monomer und wenigstens einem ungesättigten Polyetherpolyol.

7. Verfahren nach Anspruch 5 oder 6, **dadurch gekennzeichnet, dass** das Copolymer (C) eine Funktionalität gegenüber Isocyanat von mindestens 4 und ein Molekulargewicht von 20.000 bis 200.000 g/mol (mittels GPC bestimmt) aufweist.

8. Verfahren nach Anspruch 1, **dadurch gekennzeichnet, dass** das Wachs (e) in geschmolzenen Zustand mit den Komponenten (a) bis (d) und gegebenenfalls (f) vermischt wird.

9. Verfahren nach Anspruch 8, **dadurch gekennzeichnet, dass** das Vermischen des Wachses (e) mit den Komponenten (a) bis (d) und gegebenenfalls (f) in einem Hochdruckmischtopf erfolgt.

10. Verfahren nach einem der Ansprüche 1 bis 9, **dadurch gekennzeichnet, dass** die polymere Verbindung mit mindestens zwei gegenüber Isocyanat reaktiven Wasserstoffatomen Polyetherole auf Basis eines difunktionellen Startermoleküls b1) und Polyetherole auf Basis eines trifunktionellen Startermoleküls b2) enthalten.

11. Verfahren nach Anspruch 10, **dadurch gekennzeichnet, dass** die Komponente b1) in einer Menge von 20 bis 60 Gew.-%, die Komponente b2) in einer Menge von 20 bis 60 Gew.-% und die Kettenverlängerungsmittel und/oder Vernetzungsmittel c) in einer Menge von 5 bis 25 Gew.-%, jeweils bezogen auf das Gesamtgewicht der Komponenten b) und c), eingesetzt werden.

12. Verfahren nach einem der Ansprüche 1 bis 11, **dadurch gekennzeichnet, dass** man nach dem Auftragen der ersten Polyurethanreaktionsmischung mindestens eine weitere Polyurethanreaktionsmischung, enthaltend Mikrohohlkugeln, auf das Rohr aufträgt (kann direkt auf die erste Reaktionsmischung/ ersten Polyurethanschicht oder aber eine spätere Lage erfolgen; Lagen können beim Auftragen der nächsten Lage noch nicht ausreagiert oder bereits ausreagiert sein).

13. Pipeline mit wärmespeichernden Eigenschaften, enthaltend eine Polyurethanschicht mit dispergierten Wachspartikeln, erhältlich nach einem Verfahren gemäß einem der Ansprüche 1 bis 12.

14. Pipeline nach Anspruch 13, **dadurch gekennzeichnet, dass** die Pipeline eine Off-Shore-Pipeline ist.

15. Pipeline nach Anspruch 13 oder 14, **dadurch gekennzeichnet, dass** die Wachsteilchen in der Polyurethanschicht eine mittlere Teilchengröße von 0,1µm bis 500µm aufweisen.

## Claims

1. A process for producing pipelines with heat-storing properties, in which
a) organic polyisocyanate is mixed with
b) at least one polymeric compound having at least two isocyanate-reactive hydrogen atoms,
c) optionally chain extender and/or crosslinker,
d) catalyst,
e) wax and
f) optionally other assistants and/or additives,
to give a first reaction mixture, and the first reaction mixture is applied to a pipe (which may already have been coated) and allowed to react fully to give a heat-storing polyurethane layer with dispersed wax particles.

2. The process according to claim 1, wherein the wax (e) is used in the form of a wax dispersion.

3. The process according to claim 2, wherein the wax particles in the wax dispersion have a mean particle size of 0.01 µm to 500 µm.

4. The process according to claim 2 or 3, wherein the wax dispersion is a dispersion of a polyethylene wax in a polymeric compound having isocyanatereactive hydrogen atoms.

5. The process according to claim 4, wherein the emulsifier used is a copolymer (C).

6. The process according to claim 5, wherein the copolymer (C) is formed from at least one α,β-ethylenically unsaturated monomer and at least one unsaturated polyether polyol.

7. The process according to claim 5 or 6, wherein the copolymer (C) has a functionality with respect to isocyanate of at least 4 and a molecular weight of 20 000 to 200 000 g/mol (determined by means of GPC).

8. The process according to claim 1, wherein the wax (e) is mixed in the molten state with components (a) to (d) and optionally (f).

9. The process according to claim 8, wherein the wax (e) is mixed with components (a) to (d) and optionally (f) in a high-pressure mixing pot.

10. The process according to any of claims 1 to 9, wherein the polymeric compound having at least two isocyanate-reactive hydrogen atoms comprises polyetherols based on a difunctional starter molecule b1) and polyetherols based on a trifunctional starter molecule b2).

11. The process according to claim 10, wherein component b1) is used in an amount of 20 to 60% by weight, component b2) in an amount of 20 to 60% by weight and the chain extenders and/or crosslinkers c) in an amount of 5 to 25% by weight, based in each case on the total weight of components b) and c).

12. The process as claimed in any of claims 1 to 11, wherein the application of the first polyurethane reaction mixture is followed by application of at least one further polyurethane reaction mixture comprising hollow microspheres to the pipe (may be applied directly to the first reaction mixture/first polyurethane layer or else a later layer; layers may not yet have fully reacted or already have fully reacted on application of the next layer).

13. A pipeline with heat-storing properties, comprising a polyurethane layer with dispersed wax particles obtainable by a process according to any of claims 1 to 12.

14. The pipeline according to claim 13, which is an offshore pipeline.

15. The pipeline according to claim 13 or 14, wherein the wax particles in the polyurethane layer have a mean particle size of 0.1 µm to 500 µm.

## Revendications

1. Procédé de fabrication de canalisations ayant des propriétés de stockage de la chaleur, selon lequel
a) un polyisocyanate organique est mélangé avec
b) au moins un composé polymère contenant au moins deux atomes d'hydrogène réactifs avec les isocyanates,
c) éventuellement des agents d'allongement de chaînes et/ou des agents de réticulation,
d) un catalyseur,
e) une cire et
f) éventuellement d'autres adjuvants et/ou additifs,
pour former un premier mélange réactionnel, le premier mélange réactionnel est appliqué sur un tube (qui peut déjà être revêtu) et laissé réagir pour former une couche de polyuréthane contenant des particules de cire dispersées stockant la chaleur.

2. Procédé selon la revendication 1, **caractérisé en ce que** la cire (e) est utilisée sous la forme d'une dispersion de cire.

3. Procédé selon la revendication 2, **caractérisé en ce que** les particules de cire présentent dans la dispersion de cire une taille de particule moyenne de 0,01 µm à 500 µm.

4. Procédé selon la revendication 2 ou 3, **caractérisé en ce que** la dispersion de cire est une dispersion d'une cire de polyéthylène dans un composé polymère contenant des atomes d'hydrogène réactifs avec les isocyanates.

5. Procédé selon la revendication 4, **caractérisé en ce qu'**un copolymère (C) est utilisé en tant qu'émulsifiant.

6. Procédé selon la revendication 5, **caractérisé en ce que** le copolymère (C) est formé par au moins un monomère α,β-éthyléniquement insaturé et au moins un polyéther-polyol insaturé.

7. Procédé selon la revendication 5 ou 6, **caractérisé en ce que** le copolymère (C) présente une fonctionnalité par rapport à l'isocyanate d'au moins 4 et un poids moléculaire de 20 000 à 200 000 g/mol (déterminé par CPG).

8. Procédé selon la revendication 1, **caractérisé en ce que** la cire (e) est mélangée à l'état fondu avec les composants (a) à (d) et éventuellement (f).

9. Procédé selon la revendication 8, **caractérisé en ce que** le mélange de la cire (e) avec les composants (a) à (d) et éventuellement (f) a lieu dans un pot de mélange sous pression élevée.

10. Procédé selon l'une quelconque des revendications 1 à 9, **caractérisé en ce que** le composé polymère contenant au moins deux atomes d'hydrogène réactifs avec les isocyanates contient des polyétherols à base d'une molécule de départ bifonctionnelle b1) et des polyétherols à base d'une molécule de départ trifonctionnelle b2).

11. Procédé selon la revendication 10, **caractérisé en ce que** le composant b1) est utilisé en une quantité de 20 à 60 % en poids, le composant b2) en une quantité de 20 à 60 % en poids, et l'agent d'allongement de chaînes et/ou l'agent de réticulation c) en une quantité de 5 à 25 % en poids, à chaque fois par rapport au poids total des composants b) et c).

12. Procédé selon l'une quelconque des revendications 1 à 11, **caractérisé en ce qu'**après l'application du premier mélange réactionnel de polyuréthane, au moins un autre mélange réactionnel de polyuréthane, contenant des microbilles creuses, est appliqué sur le tube (peut avoir lieu directement sur le premier mélange réactionnel/la première couche de polyuréthane ou sur une couche ultérieure ; les couches peuvent ne pas encore avoir réagi ou avoir déjà réagi lors de l'application de la couche suivante).

13. Canalisation ayant des propriétés de stockage de la chaleur, contenant une couche de polyuréthane qui contient des particules de cire dispersées, pouvant être obtenue par un procédé selon l'une quelconque des revendications 1 à 12.

14. Canalisation selon la revendication 13, **caractérisée en ce que** la canalisation est une canalisation en mer.

15. Canalisation selon la revendication 13 ou 14, **caractérisée en ce que** les particules de cire dans la couche de polyuréthane présentent une taille de particule moyenne de 0,1 µm à 500 µm.
